# EUROPÄISCHE PATENTSCHRIFT

(11) **EP 1 164 687 B1**
(45) Veröffentlichungstag und Bekanntmachung des Hinweises auf die Patenterteilung: **31.03.2004**
(21) Anmeldenummer: 01112754.5
(22) Anmeldetag: 25.05.2001
(51) Int. Cl.: H02K 5/22, H01R 43/24

(54) **Verfahren zum Herstellen eines Gehäusebodenteils eines aufsteckbaren Klemmenkastens für einen Elektromotor**
Method for manufacturing a housing bottom of a detachable terminal box for an electromotor
Procédé de fabrication du fond d'un boîtier de bornes amovible pour un moteur électrique

(30) Priorität: 31.05.2000 DE 10027249
(43) Veröffentlichungstag der Anmeldung: 19.12.2001
(73) Patentinhaber: GRUNDFOS A/S, DK-8850 Bjerringbro (DK)
(72) Erfinder: Mikkelsen, Steen, 8850 Bjerringbro (DK)
(74) Vertreter: Vollmann, Heiko, Dipl.-Ing.

(56) Entgegenhaltungen:
- DE-U- 9 315 914
- US-A- 4 845 396
- US-A- 5 309 053
- US-A- 5 636 431

## Beschreibung

Die Erfindung geht aus von einem Verfahren zum Herstellen eines Gehäusebodenteils eines aufsteckbaren Klemmenkastens für einen Elektromotor, gemäß dem Oberbegriff des Patentanspruchs 1.

In dem DE-Gebrauchsmuster 93 15 914, das als nächstliegender Stand der Technik angesehen wird ist ein durch Gießen herstellbarer Klemmenkasten für einen Elektromotor beschrieben. Der Klemmenkasten umfasst ein Bodenteil, in dem u. a. Kontaktteile im Wesentlichen in Form von Anschlussklemmen zur Steuerung des Elektromotors untergebracht sind, sowie einen Deckel. Der Klemmenkasten ist über eine an seiner Unterseite außen angegossene Steckfassung, welche von den Anschlussklemmen durchragt wird, in die Steckaufnahme des Elektromotors einsteckbar, um dessen Stator elektrisch anzuschließen. In dem gegossenen Bodenteil und in der Steckfassung werden die Anschlussklemmen nachträglich, d. h. nach dem Gießen des Bodenteils, formschlüssig fixiert und mit im Inneren des Klemmenkastens vorgesehenen Funktionsteilen, Steuerteilen usw. elektrisch verbunden. Wenigstens einige der Steuerteile und/oder der Funktionsteile werden andererseits mit einem Netzkabel verschaltet, indem die Adern des Kabels mit den entsprechenden Steuerteilen/Funktionsteilen elektrisch verbunden werden. Das nachträgliche Einstecken und Fixieren der einzelnen Anschlussklemmen an den dafür vorgesehenen, formschlüssigen Befestigungsausbildungen und Durchbrechungen des gegossenen Bodenteils ist umständlich und zeitraubend und verteuert die Herstellung eines aufsteckfertigen Klemmenkastens in der Massenproduktion beträchtlich. Außerdem kann durch die Steckfassung des Bodenteils hindurch Feuchtigkeit in den Klemmenkasten eindringen, wodurch die Funktion der Steuerteile und Funktionsteile in dem Klemmenkasten beeinträchtigt werden kann.

Die Aufgabe der Erfindung besteht in der Verbesserung des einleitend angeführten Verfahrens dahingehend, dass die Anschlussklemmen und andere Kontaktteile des Gehäusebodenteils kostengünstiger als bisher und sicher abgedichtet in dem Gehäusebodenteil fixierbar sind.

Die Lösung dieser Aufgabe ist in dem Patentanspruch 1 angegeben.

Nach dieser Lösung sind die Anschlussklemmen und andere Kontaktteile wesentlich kostengünstiger fixierbar als bisher, da sie beim Gießvorgang für das Gehäusebodenteil durch Umgießen ihres Mittelabschnittes gleichzeitig in diesem Gehäusebodenteil fest eingegossen werden. Die Kontaktteile sind bei Entnahme des erstarrten Gehäusebodenteils aus der Gießform bereits in dem Gehäusebodenteil in vorbestimmter Position angeordnet, jedoch noch miteinander verbunden. Nach dem sich dann anschließenden Durchtrennen der Verbindungsstege werden die an den Trennungsstellen entstandenen Löcher des Gehäusebodenteils mit Vergussmasse zugegossen, so dass alle Kontaktteile in ihrem umgossenen Mittelabschnitt voneinander getrennt und feuchtigkeitsdicht umschlossen sind, wodurch sie gegeneinander elektrisch isoliert sind und ein Eindringen von Feuchtigkeit in den späteren Klemmenkasten vermieden ist.

Eine vorteilhafte Ausgestaltung des erfindungsgemäßen Verfahrens besteht darin, dass das Entfernen der Verbindungsstege der Kontaktteile aus dem Gehäusebodenteil durch einen Stanzvorgang erfolgt. Dadurch wird ein schnelles Entfernen der Verbindungsstege erreicht.

Eine weitere vorteilhafte Ausgestaltung des erfindungsgemäßen Verfahrens besteht darin, dass beim Gießen des Gehäusebodenteils durch entsprechende Ausbildung der Gießform für das Gehäusebodenteil erste Gießwege an dem Gehäusebodenteil für das Vergießen der Vergussmasse geschaffen werden, die wenigstens Weiterleitungswege zwischen den Stellen für die zu entfernenden Verbindungsstege der Kontaktteile umfassen. Auf diese Weise gelangt die Vergussmasse schnell und in ausreichender Menge zu den vorzugsweise durch Stanzen entstandenen Löchern in dem Gehäusebodenteil, um diese Löcher dichtend zu füllen.

In noch weiterer vorteilhafter Ausgestaltung des erfindungsgemäßen Verfahrens wird das Gehäusebodenteil bei seiner Gießherstellung an seinem Oberrand mit einer Umfangsnut und im Übrigen mit von den ersten Gießwegen abgehenden und zu der Umfangsnut führenden zweiten Gießwegen versehen. So gelangt die Vergussmasse, die vorzugsweise ein elastisches Material ist, beim Ausgießen der erwähnten Stanzlöcher auch in die Umfangsnut und bildet hier einen elastischen Dichtungsring aus. Auf diese Weise wird somit gleichzeitig mit dem Verschließen der Stanzlöcher auch der Dichtungsring in der Umfangsnut ausgebildet, gegen den der Gehäusedeckel des Klemmenkastens dichtend zur Anlage kommt.

Nach einer anderen vorteilhaften Ausgestaltung des erfindungsgemäßen Verfahrens wird an der Unterseite des Gehäusebodenteils eine nicht verlierbare, elastische Abdichtungsschicht geschaffen, indem als Vergussmasse ein elastisches Material verwendet wird, das beim Zugießen der Stanzlöcher mit dieser Vergussmasse über die ersten Gießwege ein Anteil der Vergussmasse durch die Stanzlöcher hindurch zu der Unterseite des Gehäusebodenteils geleitet wird. Hierdurch wird auch eine Feuchtigkeitsabdichtung zwischen dem Gehäusebodenteil und dem daran angeschlossenen Elektromotor erreicht.

Die Erfindung ist nachstehend anhand eines in den anliegenden Zeichnungen dargestellten Ausführungsbeispieles näher erläutert. Es zeigen:
- Fig. 1: einen Satz formgerecht vorgefertigter Kontaktteile,
- Fig. 2: eine Perspektivansicht eines gegossenen Gehäusebodenteils mit darin eingegossenen Kontaktteilen,
- Fig. 3: eine teilweise Perspektivansicht des gegossenen Gehäusebodenteils nach Fig. 3 in vergrößertem Maßstab,
- Fig. 4: eine Ansicht nach Fig. 3, jedoch nach einem Stanzvorgang,
- Fig. 5: eine Ansicht entsprechend Fig. 4, jedoch nach einem Ausgießvorgang,
- Fig. 6: eine Perspektivansicht auf die Unterseite des gegossenen Gehäusebodenteils, ebenfalls nach einem Ausgießvorgang.

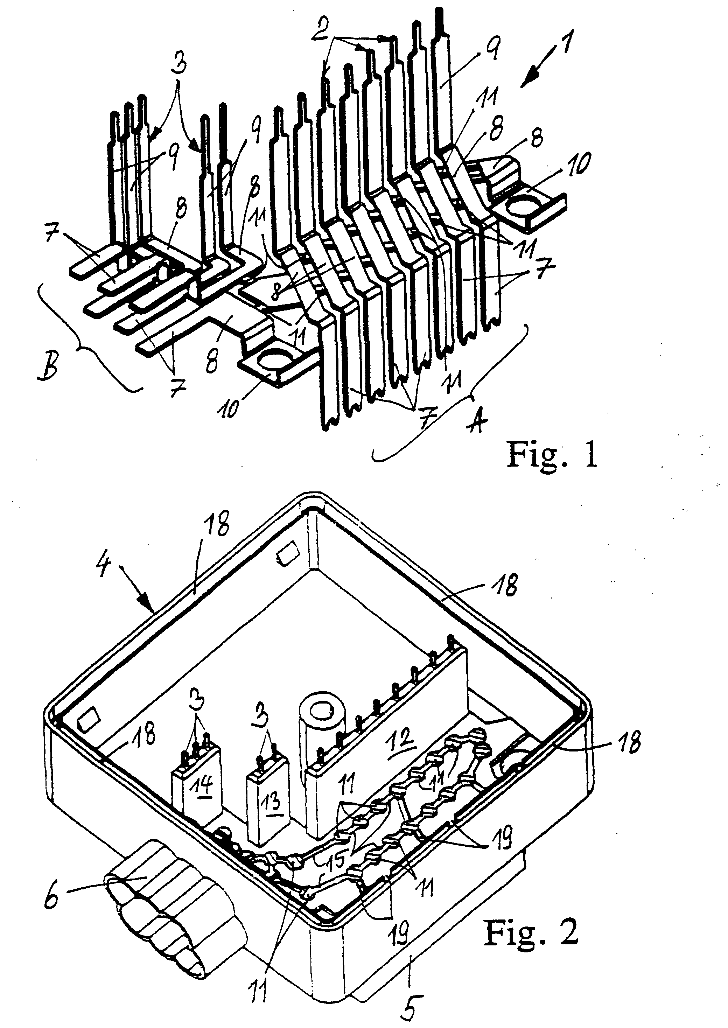

Fig. 1 zeigt einen allgemein mit 1 bezeichneten Satzzusammenhängender Kontaktteile 2 und 3 für ein Gehäusebodenteil 4, das zusammen mit einem Schutzdeckel (nicht gezeigt) einen Klemmenkasten für einen (nicht dargestellten) Elektromotor bildet. Der Elektromotor wird vorzugsweise für eine Heizungspumpe verwendet. Das Gehäusebodenteil weist auf seiner Unterseite, die dem Elektromotor zugekehrt ist, eine angegossene Steckfassung 5 auf, mit welcher der fertige Klemmenkasten auf den Elektromotor aufgesteckt wird. Der Motor weist hierzu eine bekannte Steckaufnahme auf, deren Kontaktteile mit dem Stator des Motors elektrisch verbunden sind.

Das Gehäusebodenteil 4 weist des Weiteren einen Steckdosenanschluss 6 auf, in den ein Netzkabel eingesteckt wird, um den Klemmenkasten und damit den mit ihm verbundenen Elektromotor mit elektrischer Energie zu versorgen.

Der Satz 1 aus den miteinanderzusammenhängenden Kontaktteilen 2 und 3 wird in bekannter Technik durch Stanzen und Biegen aus einer Platine aus elektrisch leitendem Material hergestellt. Im dargestellten Fall ist eine Gruppe A aus den Kontaktteilen 2 und eine Gruppe B aus den Kontaktteilen 3 vorgesehen, wobei die Gruppe A die Verbindung mit dem Elektromotor herstellt, während die Gruppe B für den Anschluss an das Netzkabel gedacht ist. Die meisten Kontaktteile 2,3 weisen einen äußeren Steck- oder Kontaktabschnitt 7, einen Mittelabschnitt 8 und einen inneren Anschlussabschnitt 9 auf, wobei die Abschnitte 9 an die vorerwähnten Steuerteile und Funktionsteile (nicht gezeigt) des Klemmenkastens elektrisch angeschlossen werden. Einige Kontaktteile können auch als Temperaturleitungsteile ausgebildet sein und weisen daher anstelle eines Steckabschnittes einen Fühlabschnitt 10 als Kontaktabschnitt auf. Diese Kontaktteile sind ebenfalls mit entsprechenden Funktionsteilen verschaltet, so dass ein Elektromotor bei Überhitzung automatisch abgeschaltet wird.

Die einzelnen Kontaktteile 2 und 3 des in einem ersten Verfahrensschritt durch Stanzen und Biegen herstellten Kontaktteilsatzes 1 sind beispielsweise durch zwei Verbindungsstege an ihrem Mittelabschnitt 8 miteinander vorpositioniert verbunden. Auf diese Weise bilden die Kontaktteile 2, 3 den zusammenhängenden Satz 1, der zum Eingießen in das Gehäusebodenteil verwendet wird.

Der nächste Verfahrensschritt ist das Gießen des Gehäusebodenteils 4 gemäß Fig. 2. Hierzu wird in bekannter Technik eine entsprechende Gießform ausgebildet, mit welcher die gewünschte Form des Gehäusebodenteils hergestellt wird. Das aus Kunststoffmaterial gegossene Gehäusebodenteil 4 kann außer der äußeren Steckfassung 5 und dem Netzsteckanschluss 6 auch innere Stabilisierungsleisten 12, 13 und 14 aufweisen, in welchen der innere Anschlussabschnitt 9 Kontaktteile 2 und 3 eingegossen ist. Vor dem Ausführen des Gießvorganges für das Gehäusebodenteil 4 wird der formgerecht vorgefertigte Kontaktteilsatz 1 in die entsprechende Gießform eingelegt und fixiert, wonach das Gießen ausgeführt wird. Nach der Erstarrung des Gießmaterials wird das erstarrte Gehäusebodenteil 4 mit dem nun eingegossenen Kontaktteilsatz 1 aus der Form herausgenommen und vorzugsweise einem Stanzvorgang unterworfen, um die Verbindungsstege 11 zwischen den Kontaktteilen 2 und 3 zu entfernen, so dass die Kontaktteile dann voneinander vollständig getrennt sind. Anschließend müssen die durch den Stanzvorgang an den Trennungsstellen im Bereich der entfernten Verbindungsstege in dem Gehäusebodenteil entstandenen Stanzlöcher 16 wieder abgedichtet werden, was mit Hilfe einer Vergussmasse erfolgt.

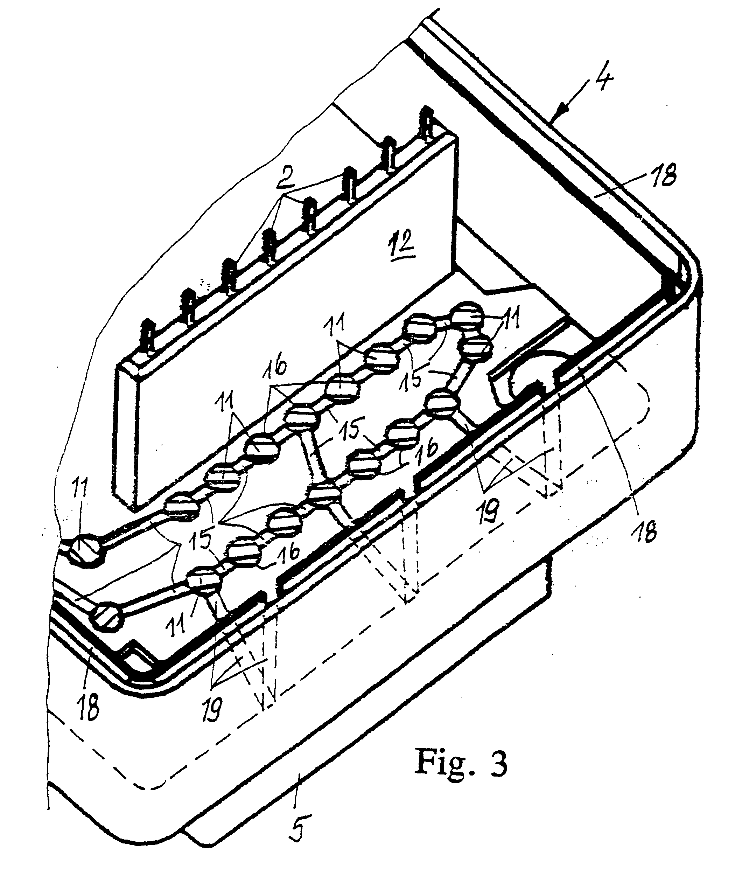

Um das Ausstanzen der Verbindungsstege des gegossenen Gehäusebodenteils und das Ausgießen der entstandenen Stanzlöcher 16 mit Vergussmasse zu erleichtern, kann beim Gießen des Gehäusebodenteils so vorgegangen werden, dass in dem Gehäusebodenteil erste Gießwege ausgebildet werden, indem die Gießform für das Gehäusebodenteil mit rippenartigen Vorsprüngen versehen wird. Diese ersten Gießwege umfassen wenigstens Strecken 15 zwischen den Stellen 16 der zu entfernenden Verbindungsstege 11, können aber auch diese Bodenwandstellen des Gehäusebodenteils mit einschließen, wie es in Fig. 3 klar zu erkennen ist. Somit liegen nach dem Herausnehmen des erstarrten Gehäusebodenteils 4 aus der Gießform die Verbindungsstege 11 frei, so dass nach dem Stanzvorgang durch Sichtprüfung auf einfache Weise festgestellt werden kann, ob alle Verbindungsstege entfernt worden sind. Außerdem wird der Stanzvorgang erleichtert, da weniger Bodenwandmaterial durchtrennt werden muss.

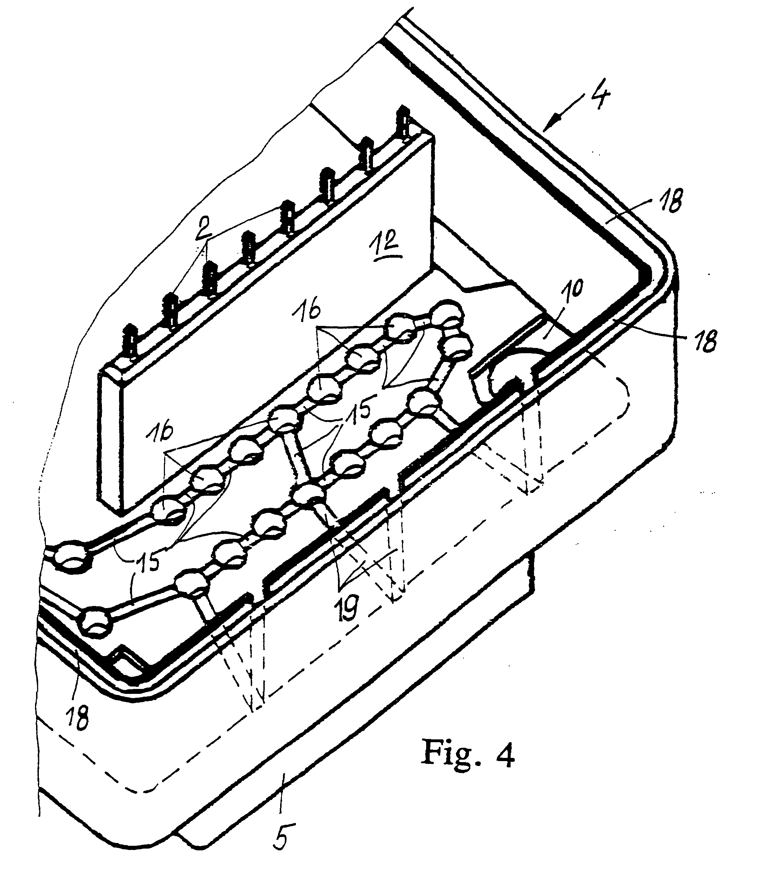

Fig. 4 zeigt das Gehäusebodenteil 4 nach dem Stanzvorgang, und man erkennt, dass an den Stanzstellen 16 keine Verbindungsstege 11 mehr zu sehen sind. Es erfolgt nun das Ausgießen der Stanzstellen bzw. Stanzlöcher 16 mit geeigneter Vergussmasse. Hierzu wird das gegossene und gestanzte Gehäusebodenteil 4 in eine entsprechende Form eingesetzt, in welche die Vergussmasse mit Druck eingegeben wird. Über die ersten Gießwege gelangt dann die Vergussmasse zu allen Stanzlöchern 16 und verschließt diese. Das so hergestellte Gehäusebodenteil 4 wird dann der Fertigmontage zugeführt, d. h. es werden die vorerwähnten Steuer- und Funktionsteile in dem Gehäusebodenteil 4 montiert, die ggf. bereits auf einer Leiterplatte vormontiert sein können.

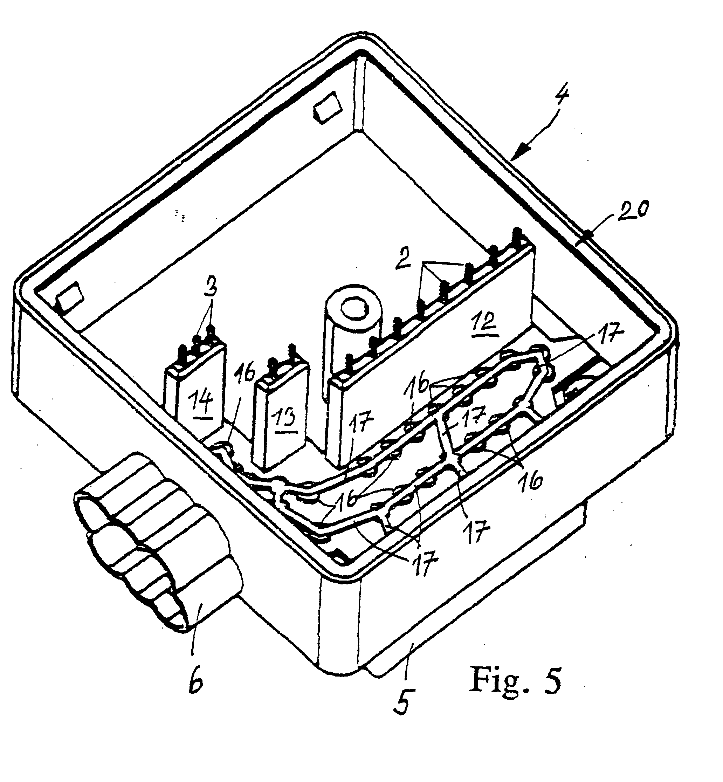

Fig. 5 zeigt das Gehäusebodenteil 4 nach dem Ausgießen mit Vergussmasse. Man erkennt, dass die Vergussmasse ein zusammenhängendes Netzwerk 17 bildet, welches pfropfenartige Erweiterungen aufweist, mit welchen die Stanzlöcher 16 in der Bodenwand des Gehäusebodenteils 4 ausgefüllt sind.

Wie es aus Fig. 2, aber noch besser aus den Fig. 3 und 4 zu erkennen ist, kann das Gehäusebodenteil 4 an seinem Oberrand mit einer Umfangsnut 18 versehen werden, die ebenfalls beim Gießen des Gehäusebodenteils mitgeformt wird, und zwar durch entsprechende Ausbildung der Gießform für das Gehäusebodenteil. Um diese Umfangsnut 18 gleichzeitig mit dem Ausgießen der vorerwähnten Stanzlöcher 16 mit Vergussmasse ausgießen zu können, um einen elastischen Dichtungsring darin zu bilden, werden zweite Gießwege vorgesehen. Wie es aus den Fig. 3 und 4 gut zu erkennen ist, sind z. B. drei weitere Gießwege 19 vorgesehen, die von den Stellen, die die späteren Stanzlöcher 16 bilden, ausgehen und zur Seitenwand des Gehäusebodenteils verlaufen. Von dort erstrecken sie sich an der Innenseite der Seitenwand des Gehäusebodenteils aufwärts zum Oberrand des Gehäusebodenteils und münden in die Umfangsnut 18 ein. Wenn die Stanzlöcher 16 in der Bodenwand des Gehäusebodenteils mit der abdichtenden Vergussmasse ausgegossen werden, gelangt gleichzeitig auch ein Anteil der Vergussmasse über die weiteren Gießwege 19 zur Umfangsnut 18 und füllt diese vollständig aus, um in dieser Umfangsnut eine ringförmige Dichtungseinlage 20 auszubilden. Als Vergussmasse wird in diesem Fall vorteilhaft ein elastisches Material gewählt, so dass in der Umfangsnut eine elastische Dichtungseinlage entsteht, die beim Anbringen eines Deckelteils auf dem Gehäusebodenteil elastisch dichtend nachgibt.

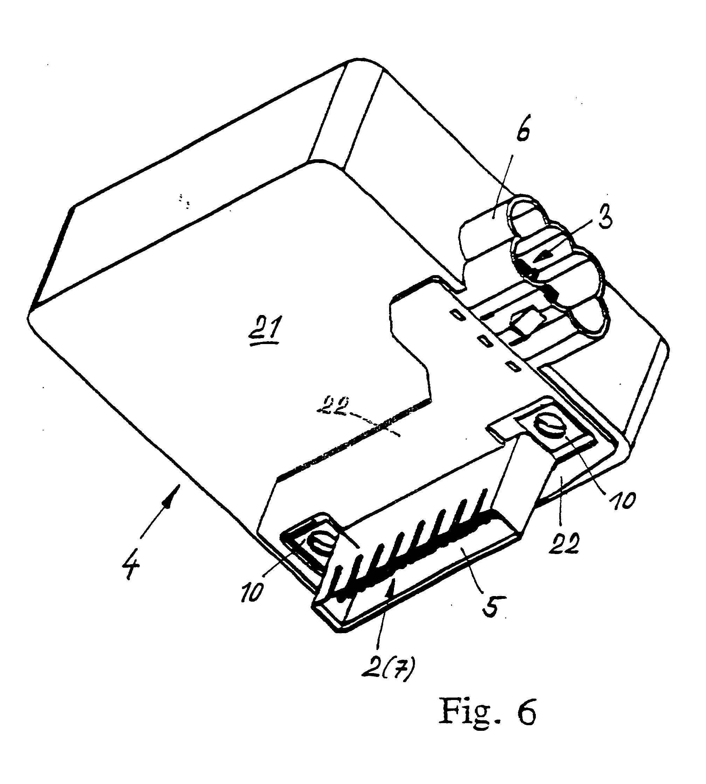

In weiterer Vervollständigung des Verfahrens zur Herstellung des Gehäusebodenteils 4 kann so vorgegangen werden, dass auch an der Unterseite 21 des Gehäusebodenteils eine elastische Abdichtungsschicht 22 ausgebildet wird. Diese Abdichtungsschicht umfasst vorzugsweise denjenigen Bereich des Gehäusebodenteils, der später auf einem Kontaktbereich des Gehäuses des Elektromotors aufliegt. Vorzugsweise wird die Abdichtungsschicht 22 auf der Unterseite 21 des Gehäusebodenteils so ausgebildet, dass sie die angegossene Steckfassung 5 des Gehäusebodenteils umgibt, wie es aus Fig. 6 zu entnehmen ist. Hierdurch wird erreicht, dass auch die Gegensteckfassung des Elektromotors, in welche die Steckfassung 5 des Gehäusebodenteils eingesteckt wird, gegenüber der atmosphärischen Umgebung feuchtigkeitsdicht abgeschlossen ist, so dass keine Feuchtigkeit aus der Umgebung in den Elektromotor eindringen kann. Des Weiteren kann die Abdichtungsschicht nicht verlorengehen, da sie mit dem starren Gehäusebodenmaterial formschlüssig verbunden ist. Vorzugsweise wird auch in diesem Fall eine elastische Vergussmasse verwendet, um eine einwandfreie Feuchtigkeitsabdichtung zu erzielen. Die Herstellung der Abdichtungsschicht 22 erfolgt gleichzeitig mit dem Vergießen der Stanzlöcher 16 im Bereich der entfernten Verbindungsstege 11 der in dem Gehäusebodenteil 4 eingegossenen Kontaktteile 2, 3. Beim Ausgießen der Stanzlöcher 16 gelangt auch eine ausreichende Menge an Vergussmasse über die dafür ausgewählten Stanzlöcher auf die Unterseite 21 des Gehäusebodenteils. Selbstverständlich ist auch in diesem Fall die Gießform für das Vergießen der Vergussmasse im Bereich der herzustellenden Abdichtungsschicht 22 mit einer entsprechenden Negativausbildung versehen.

## Patentansprüche

1. Verfahren zum Herstellen eines Gehäusebodenteils eines aufsteckbaren Klemmenkastens für einen Elektromotor, nach dem ein Satz zusammenhängender elektrischer oder im Wesentlichen elektrischer Kontaktteile, die je einen äußeren Steckabschnitt, einen Mittelabschnitt und einen inneren Anschlussabschnitt aufweisen, formgerecht vorgefertigt und mit dem durch Gießen herzustellenden Gehäusebodenteil verbunden wird, wonach die Kontakteile voneinander getrennt werden, **dadurch gekennzeichnet, dass** der Kontaktteilesatz (1) derart vorgefertigt wird, dass die Kontaktteile (2, 3) an ihrem Mittelabschnitt (8) durch Verbindungsstege (11) miteinander verbunden sind, dass der so vorgefertigte Kontaktteilesatz (1) beim Gießen des Gehäusebodenteils (4) mit seinem Mittelabschnitt (8) in das Gehäusebodenteil eingegossen wird, dass die Verbindungsstege (11) des Mittelabschnittes (8) aller Kontaktteile (2, 3) nach dem Erstarren des gegossenen Gehäusebodenteils (4) entfernt werden und dass die an den Stellen der entfernten Verbindungsstege (11) in dem Gehäusebodenteil entstandenen Löcher (16) mit Vergussmasse (17) ausgegossen werden.

2. Verfahren nach Anspruch 1, **dadurch gekennzeichnet, dass** das Entfernen der Verbindungsstege (11) der Kontaktteile (2, 3) aus dem Gehäusebodenteil (4) durch einen Stanzvorgang erfolgt.

3. Verfahren nach Anspruch 1 oder 2, **dadurch gekennzeichnet, dass** beim Gießen des Gehäusebodenteils (4) durch entsprechende Ausbildung der Gießform für das Gehäusebodenteil erste Gießwege (15) an dem Gehäusebodenteil für das Vergießen der Vergussmasse geschaffen werden, die wenigstens Weiterleitungswege zwischen den Stellen des Gehäusebodenteils, an denen sich die zu entfernenden Verbindungsstege (11) der Kontaktteile (2, 3) befinden, umfassen.

4. Verfahren nach Anspruch 3, **dadurch gekennzeichnet, dass** das Gehäusebodenteil (4) bei seiner Gießherstellung an seinem Oberrand mit einer Umfangsnut (18) und im Übrigen mit von den ersten Gießwegen (15) abgehenden und zu der Umfangsnut (18) führenden zweiten Gießwegen (19) versehen wird.

5. Verfahren nach Anspruch 4, **dadurch gekennzeichnet, dass** als Vergussmasse ein elastisches Material verwendet wird und dass die Stanzlöcher (16) und die Umfangsnut (18) über die ersten und zweiten Gießwege (15, 19) mit der eine elastische Dichtungseinlage bildenden Vergussmasse ausgegossen werden.

6. Verfahren nach Anspruch 3, **dadurch gekennzeichnet, dass** als Vergussmasse ein elastisches Material verwendet wird, das beim Zugießen der Stanzlöcher (16) mit Vergussmasse über die ersten Gießwege (15) ein Anteil der Vergussmasse durch die Stanzlöcher (16) hindurch zu der Unterseite (21) des Gehäusebodenteils (4) geleitet wird, um an dieser Unterseite eine elastische, unverlierbare Abdichtungsschicht (22) zu schaffen.

7. Verfahren nach Anspruch 6, **dadurch gekennzeichnet, dass** die elastische Abdichtungsschicht (22) so ausgebildet wird, dass sie eine den äußeren Steckabschnitt (7) der Kontaktteile (2) enthaltende, an der Unterseite (21) des Gehäusebodenteils (4) angegossene Steckfassung (5) umgibt.

## Claims

1. A method for manufacturing a housing bottom of an attachable terminal box for an electric motor, according to which a set of connected electrical or essentially electrical contact parts which in each case comprise an external plug-in section, a middle section and an inner connection section is premanufactured correct to shape, and is connected to the housing bottom to be manufactured by casting, whereupon the contact parts are separated from one another, **characterised in that** the contact part set (1) is premanufactured in a manner such that the contact parts (2, 3) at their middle section (8) are connected to one another by connecting webs (11), that the thus premanufactured contact part set (1) on casting the housing bottom (4) with its middle section (8) is cast into the housing bottom, that the connecting webs (11) of the middle section (8) of all contact parts (2, 3) are removed after solidification of the cast housing bottom (4) and that the holes (16) which have arisen at the locations of the removed connecting webs (11) in the housing bottom are cast out with a casting mass [filling compound] (17).

2. A method according to claim 1, **characterised in that** the removal of the connecting webs (11) of the contact parts (2, 3) from the housing bottom (4) is effected by a punching procedure.

3. A method according to claim 1 or 2, **characterised in that** on casting the housing bottom (4) by way of a suitable design of the casting mould for the housing bottom (4) one creates first casting paths (15) on the housing bottom for casting the casting mass [filling compound], which comprise at least further conduit paths between the locations of the housing bottom at which the connecting webs (11) of the contact parts (2, 3) to be removed are located.

4. A method according to claim 3, **characterised in that** the housing bottom (4) with its casting manufacture on its upper edge is provided with a circumferential groove (18) and otherwise is provided with second casting paths (19) originating from the first casting paths (19) and leading to the circumferential groove (18).

5. A method according to claim 4, **characterised in that** as a casting mass [filling compound] one uses an elastic material, and that the punch holes (16) and the circumferential groove (18) are cast out via the first and second casing paths (15, 19) with the casting mass [filling compound] forming an elastic sealing inlay

6. A method according to claim 3, **characterised in that** as a casting mass [filling compound] one uses an elastic material and that on casting the punch holes (16) with the casting mass [filling compound] via the first casting paths (15) a portion of the casting mass [filling compound] is led through the punch holes (16) to the lower side of the housing bottom (4) in order on this lower side to create an elastic, unlosable sealing layer (22).

7. A method according to claim 6, **characterised in that** the elastic sealing layer (22) is formed such that it surrounds a plug-in socket (5) which contains the outer plug-in section (7) of the contact parts (2) and which is cast on the lower side (21) of the housing bottom (4).

## Revendications

1. Procédé pour la fabrication du fond de boîtier d'une boîte à bornes enfichables pour un moteur électrique, selon lequel un ensemble de pièces de contact électriques ou sensiblement électriques et cohérentes, qui présentent chacune une partie d'emboîtement extérieure, une partie centrale et une partie intérieure de raccordement, est préfabriqué de façon adaptée à la forme et est relié au fond de boîtier à fabriquer par coulée, après quoi les pièces de contact sont séparées les unes des autres, **caractérisé en ce que** l'ensemble de pièces de contact (1) est préfabriqué de telle sorte que les pièces de contact (2, 3) sont reliées entre elles par des nervures de liaison (11) sur leur partie centrale (8), que l'ensemble de pièces de contact (1) ainsi préfabriqué est coulé avec sa partie centrale (8) dans le fond de boîtier lors de la coulée du fond de boîtier (4), que les nervures de liaison (11) de la partie centrale (8) de toutes les pièces de contact (2, 3) sont enlevées après la solidification du fond de boîtier (4) coulé et que les trous (16) formés aux endroits des nervures de liaison (11) enlevées dans le fond du boîtier sont comblés avec de la masse de scellement (17).

2. Procédé selon la revendication 1, **caractérisé en ce que** l'enlèvement des nervures de liaison (11) des pièces de contact (2, 3) du fond du boîtier (4) s'effectue par une opération de découpage.

3. Procédé selon la revendication 1 ou 2, **caractérisé en ce que**, lors de la coulée du fond du boîtier (4), des premiers canaux de coulée (15) sont créés sur le fond du boîtier pour la coulée de la masse de scellement par une réalisation appropriée du moule de coulée pour le fond du boîtier, lesquels canaux comprennent au moins des canaux d'acheminement entre les endroits du fond du boîtier où se trouvent les nervures de liaison (11) à enlever des pièces de contact (2, 3).

4. Procédé selon la revendication 3, **caractérisé en ce que** le fond du boîtier (4) est pourvu, lors de sa fabrication par coulée, sur son bord supérieur, d'une rainure périphérique (18) et par ailleurs de seconds canaux de coulée (19) partant des premiers canaux de coulée (15) et allant à la rainure périphérique (18).

5. Procédé selon la revendication 4, **caractérisé en ce qu'**on utilise un matériau élastique comme masse de scellement et **en ce que** les trous de découpage (16) et la rainure périphérique (18) sont comblés par les premiers et seconds canaux de coulée (15, 19) avec la masse de scellement formant une garniture d'étanchéité élastique.

6. Procédé selon la revendication 3, **caractérisé en ce qu'**on utilise comme masse de scellement un matériau élastique et **en ce que** lors de la fermeture par coulée des trous de découpage (16) avec de la masse de scellement par les premiers canaux de coulée (15), une partie de la masse de scellement est dirigée à travers les trous de découpage (16) jusqu'à la face inférieure (21) du fond du boîtier (4), afin de créer sur cette face inférieure une couche d'étanchéité (22) élastique et imperdable.

7. Procédé selon la revendication 6, **caractérisé en ce que** la couche d'étanchéité (22) élastique est conçue de telle sorte qu'elle entoure une douille de connexion (5) contenant la partie emboîtable (7) extérieure des pièces de contact (2) et coulée sur la face inférieure (21) du fond du boîtier (4).
